# EUROPEAN PATENT SPECIFICATION

(11) **EP 0 939 591 B1**
(45) Date of publication and mention of the grant of the patent: **28.04.2010**
(21) Application number: 97913782.5
(22) Date of filing: 28.10.1997
(51) Int. Cl.: A01N 59/16

(54) **CONTACT-KILLING NON-LEACHING ANTIMICROBIAL LIQUID COMPOSITIONS**
DURCH KONTACT ABSTÖTENDE AUSLAUGFESTE ANTIMIKROBIELLE FLÜSSIGE ZUSAMMENSETZUNGEN
COMPOSITIONS LIQUlDES ANTIMICROBIENNES NON LIXIVIANTES TUANT PAR CONTACT

(30) Priority: 28.10.1996 US 736823; 28.10.1996 US 742580
(43) Date of publication of application: 08.09.1999
(73) Proprietor: Surfacine Development Company, LLC, Tyngsboro, MA 01879 (US); Biopolymerix, Inc., c/o Biocompatibles, Ltd., Farnham, Surrey GU9 8QL (GB)
(72) Inventor: SAWAN, Samuel, P., Tyngsboro, MA 01879 (US); SHALON, Tadmor, Brentwood, MO 63144 (US); SUBRAMANYAN, Sundar, Stoneham, MA 02181 (US); YURKOVETSKIY, Alexander, Acton, MA 01720 (US)
(74) Representative: Price, Vincent Andrew
(86) International application number: PCT/US1997/019369
(87) International publication number: WO 1998/018330

(56) References cited:
- EP-A- 0 328 421
- WO-A-90/04390
- DATABASE WPI Derwent Publications Ltd., London, GB; AN 95-159308 XP002056957 ZENECA: " Antibacterial fibre prodn. for sheets and pillow covers- comprising contacting poly:hexa:methylene biguanidine cpd. and addn. reactable cpd. with fibre " & JP 07 082 665 A
- CHEMICAL ABSTRACTS, vol. 125, no. 26, 23 December 1996 Columbus, Ohio, US; abstract no. 331491v, YONEDA T.: "Manufacture of antimicrobial fibers and fiber products with excellent washfastness" XP002056955 & JP 08 226 077 A
- CHEMICAL ABSTRACTS, vol. 127, no. 14, 6 October 1997 Columbus, Ohio, US; abstract no. 186972n, NISHIHARA ET AL.: "Wide-spectrum antibacterial and antifungal agents, treatment of substrates with the agents , and the treated substrates " XP002056956 & JP 09 208 411 A

## Description

### Field of the Invention

The present invention relates to liquid non-leaching antimicrobial compositions, specifically, the provision of antimicrobial materials capable of killing microorganisms on contact, as well as use of such materials.

### Background of the Invention

The constant threat of bacterial contamination and the associated repercussions on health have made preservatives a ubiquitous part of drugs and packaged food. However, preservatives oftentimes have undesirable side effects, especially in pharmaceutical products. Growing consumer awareness about the deleterious effect of preservatives in recent years has necessitated their reduction or preferably, total elimination, without risking bacterial contamination, thus prompting the need for the development of new, cost effective packaging and storing methods that prevent bacterial contamination. The problem is acute in the pharmaceutical area, especially in the ophthalmic industry, which is presently driven by the need to address the issue of patient sensitivity toward preservatives in ocular solutions. Burnstein, N.L. et al., Trans. Ophthalmol. Soc., 104: H02 (1985); Collins, H.B. et al., Am. J. Optom. & Physiolog. Optics, 51: 215 (A89). Similar problem, exist in the food, medical device, healthcare and water purification areas.

The modality of action of all infection resistant surfaces presently known is via one of the following mechanisms: (i) dissolution of an antimicrobial component into the contacting solution, or (ii) chemically bound antimicrobials. The former is accomplished by blending an antimicrobial compound with a plastic material. The composite material is then either molded into a device or applied as a coating. The bactericidal action of such coatings depend on diffusion of the biotoxic agent into solution. Numerous examples of this type have been reported in the literature. Another variant of this type involves hydrolysis or dissolution of the matrix containing an antimicrobial compound, thereby effecting it's release into solution. High levels of preservatives are, however, released into contacting solutions in long term applications. In the latter mechanism, a bioactive compound is covalently bound either directly to the substrate surface or a polymeric material that forms a nondissolving surface coating. The antimicrobial compounds in such coatings exhibit greatly diminished activity, unless assisted by hydrolytic breakdown of either the bound antimicrobial or the coating itself. In either case, relatively high levels of preservative has to be released into solution in order to elicit antimicrobial action.

Various products for use externally or internally with humans or animals can serve to introduce bacterial, viral, fungal or other undesirable infections. Such products include medical devices, surgical gloves and implements, catheters, implants and other medical implements. To prevent such contamination, such devices can be treated with an antimicrobial agent. Known methods of preparing an infection-resistant medical devices have been proposed in U.S. Pat. Nos. 3,566,874; 3,674,901; 3,695,921; 3,705,938; 3,987,797; 4,024,871; 4,318,947; 4,381,380; 4,539,234; 4,612,337; 3,699,956; 4,054,139; 4,592,920; 4,603,152; 4,667,143 and 5,019,096. However, such methods are complicated and unsatisfactory. Prior known antimicrobial coatings often leach material into the surrounding environment. Many are specifically designed for releasing antimicrobial agents (see, U.S. Pat. No. 5,019,096). There is a need for medical devices and other products which are able to resist microbial infection when used in the area of the body to which they are applied, which provide this resistance over the period of time, and which do not leach antimicrobial materials into the environment.

WO 95/17152 describes a liquid dispenser for dispensing sterile liquid and maintaining the sterility of the liquid. This document discloses a coating solution containing a silver iodide/biguanidine complex for treating a substrate within the liquid dispenser.

### Summary of the Invention

According to the present invention there is provided a liquid antimicrobial composition comprising a carrier having dispersed therein a solid antimicrobial material comprising an organic polycationic polymer matrix having non-leachably bound or complexed thereto an antimicrobial metallic material for use as an antimicrobial for application to the skin.

The antimicrobial composition of the present invention is designed to enable a complexed or matrix bound biocide to retain high activity without elution of any biocide into contacting solutions, carriers or other materials. The antimicrobial's activity stems from the sustained, cooperative biocidal action of its components. Selective transfer of one component from within the organic polycationic matrix directly to the microorganism upon contact is achieved via a "hand off" mechanism upon engagement and penetration of the microorganism's cell membrane. The antimicrobial composition, therefore, maintains long term efficacy without releasing toxic elutables into the surrounding environment.

The polycationic organic material used to form the matrix must possess two important properties: it must be capable of reversibly binding or complexing with the metallic biocide, and must be capable of insinuating the biocide into the cell membrane of a microorganism which contacts it. The organic polycationic material preferably is substantially water-insoluble, and capable of dissolving into or adhering to the cell membrane surrounding the microorganism. Preferred organic polycationic materials are those which can be immobilized on a surface or incorporated into a carrier and which bind the metallic biocide in such a manner as to preferentially release the biocide into a microorganism which contacts the composition, but not into the surrounding environment. The metallic biocide preferably is a low molecular weight metallic material that is toxic to microorganisms and is capable of complexing with or reversibly binding to the organic polycationic matrix composition, but which binds preferentially to cellular proteins of microorganisms. When a microorganism contacts the antimicrobial composition, the organic polycationic material of the matrix engages or penetrates at least the outer portion of the lipid bilayer of the microorganism's cell membrane sufficiently to permit insinuation of the metallic biocide into the microorganism, where cell proteins or proteins in the lipid bilayer compete effectively for the metallic biocide due to favorable binding constants. The result is a contact-killing delivery system that selectively transfers the metallic biocide through or into the microorganism's cell membrane upon contact without elution of the biocide into solution, thereby maintaining long term efficacy. The unique mode of action of the presently described antimicrobial composition offers high activity coupled with substantially low leachables.

Organic polycationic materials useful in forming the matrix of the present invention comprise materials which are capable of: 1.) reversibly binding or complexing with the metallic biocide, and 2.) insinuating the metallic biocide into the cell membrane of the microorganism upon contact. Most preferred is the class of organic polycationic materials which can dissolve into, or adhere to, and penetrate at least the outer portion of the lipid bilayer membrane of a microorganism. It is understood that the term "polymer" as used herein includes any organic material comprising three or more repeating units, and includes oligomers, polymers, copolymers, terpolymers, etc.

An adduct may be formed by reaction of the organic polycationic material with a crosslinking agent or a chain-extending agent. Crosslinking agents which can be used in the present invention are those multifunctional organic compounds which react with the organic polycationic material to form an adduct which can be crosslinked to form a crosslinked network or matrix. Suitable crosslinking agents include, for example, multifunctional compounds containing organic groups such as isocyanates, epoxides, carboxylic acids, acid chlorides, acid anhydrides, succimidyl ether aldehydes or ketones, and further may include multifunctional compounds such as alkyl methane sulfones, alkyl trifluoromethane sulfonates, alkyl paratoluene methane sulfones, alkyl halides and multifunctional epoxides. As used herein, the term "multifunctional" refers to compounds having at least three functional groups. Chain-extending agents which can be used in the present invention are mono-functional or difunctional organic compounds which react with the organic material to form an adduct but which are not necessarily capable of being crosslinked, and which are hydrophobic, that is, substantially water-insoluble. Suitable chain-extending agents include, for example, mono-functional or difunctional aliphatic hydrocarbons, heteroaliphatic hydrocarbons, aromatic and heteroaromatic hydrocarbons, organosilanes and perfluoro compounds. Examples of chain-extending agents include bisglycidyl ethers of bisphenol A, bisepoxides such as α,ω-bisglycidyl polyethylene glycol, poly[bisphenol A-coepichlorohydrin] glycidyl end capped and N,Ndiglycidyl-4-glycidyloxyaniline. In a preferred embodiment, the organic material comprises a biguanide compound. The biguanide compound may be a polymer comprising repeating biguanide units, such as polyhexamethylene biguanide, or be a co-polymer containing biguanide units and one or more additional organic materials. For example, the biguanide polymer may be a copolymer formed by reacting a polyepoxy compound and a biguanide compound. In a currently preferred embodiment, the organic material comprises an adduct formed by reacting polyhexamethylene biguanide with an epoxide, such as N,N-bismethylene diglycidylaniline. The resulting adduct can then be applied to a substrate and allowed to dry to form a noncrosslinked matrix or may be cured to form a crosslinked network or matrix.

The metallic biocide can be any antimicrobial metallic material which is capable of non-leachably binding or complexing with the organic polycationic material, but which, when placed in contact with a microorganism, preferentially transfers to proteins in the microorganism. For this purpose, metallic materials which bind to cellular proteins of microorganisms and are toxic to the microorganisms are preferred. The metallic material can be a metal, metal oxide, metal salt, metal complex, metal alloy or mixture thereof. Examples of such metals include, e.g., silver, zinc, cadmium, lead, mercury, antimony, gold, aluminum, copper, platinum and palladium, their salts, oxides, complexes, and alloys, and mixtures thereof. The appropriate metallic material is chosen based upon the use to which the device is to be put. The currently preferred metallic materials are silver salts. In a currently preferred embodiment, a silver halide is used, most preferably, silver iodide.

In another embodiment, the liquid composition is a one part composition comprising a solution, dispersion or suspension of the organic polycationic material, the metallic biocide, and optionally, the crosslinker. To form the contact-killing coating on a substrate, this composition is applied to the substrate under conditions sufficient to immobilize the organic polycationic material on the substrate, forming a matrix in which the metallic biocide is non-leachably attached to or associated with the matrix.

The liquid compositions also may be used to make freestanding antimicrobial films, as described in more detail below. As used herein, the term "freestanding" means not attached to a substrate.

The invention further provides methods for making the compositions of the present invention, and applying them topically to form antimicrobial coatings or layers.

Generally, the compositions are made by combining the organic polycationic material with the metallic biocide under conditions appropriate to form the complex. The conditions may vary depending upon the polycationic materials and metallic biocide selected. In one embodiment, the complex is formed by contacting a liquid solution of the polycationic material with a liquid solution of the biocidal metallic material, resulting in formation of the complex as a precipitate from the solution. The precipitate then can be dried and ground to form a powder.

To make the dry or powder compositions of the invention, the organic polycationic material and the metallic biocide first may be combined in a liquid carrier to form a solution, dispersion or suspension of the complex, which then may be dried to evaporate the liquid. The drying step may be performed in any suitable manner to obtain the desired product, including spray drying, air drying, heating, etc. In one embodiment, a powder form of the complex can be prepared by combining a liquid solution of the organic material and the biocide to form a solution, dispersion or suspension of the organic material:biocide complex. The solution, dispersion or suspension then is cast as a film onto a non-adherent substrate and dried to form a film. The film then is detached from the non-adherent substrate and ground to a powder. The term "non-adherent substrate" means a substrate to which the coating or film formed from the complex will not bond, and from which it can be removed intact. In another embodiment, a complex is formed between a crosslinked form of the organic material and the biocidal metallic material. In this embodiment, the organic material is reacted with a crosslinking agent to form an adduct. The adduct then is cured to induce crosslinking. The resulting crosslinked material then is contacted with the biocidal metallic material under conditions sufficient to form the complex.

In a preferred embodiment, the organic material is polyhexamethylene biguanide (PHMB) or an adduct formed by the reaction of PHMB with an epoxy functional compound, preferably N,N-methylenebisdiglycidylaniline (MBDGA). The adduct is formed by reacting PHMB and BMDGA by heating a mixture of the two components at a temperature of from about 90 to about 95°C for about 15 minutes. The PHMB or PHMB adduct then is combined with the metallic biocide, preferably a silver salt, thereby forming a precipitate containing a complex of PHMB:MBGDA:AgI. The currently preferred silver salt is silver iodide. The resulting precipitate then is dried and can be ground to form a fine powder of the complex. Techniques for making dry powders of complexes based on organic materials and/or biocides other than PHMB and silver can be accomplished using reaction conditions and drying protocols known and available to those skilled in the art.

To make the liquid compositions of the invention, a solution, dispersion or suspension of an organic material can be made or, if appropriate, as it available from the manufacturer. For example, polycationic polymers may be available in resin form (i.e., in a liquid carrier) which may be suitable for use as is, or with a slight adjustment, e.g., in the solid content. Polymer resins also may be blended with other resins or compounds; or the polymers may be reacted with or derivatized with other polymers or compounds to form copolymers, functionalized polymers or adducts. The binding and/or reaction conditions will depend upon the materials selected.

In one embodiment, a liquid solution of a polycationic organic material, such as PHMB, can be used as the organic material. PHMB can be used as is, or can be reacted with another organic polymer or compound to form a copolymer, adduct or functionalized derivative. Protocols for formation of copolymers, adducts and derivatives are well known in the chemical art. In a currently preferred embodiment, described above in connection with the procedure for forming the dry composition, PHMB first is reacted with an epoxy functional compound to form an adduct. The resulting liquid solution containing the adduct can be applied as is and subsequently impregnated with the biocide as described below, or can be combined with the biocide to form a solution, dispersion or suspension of a PHMB adduct: biocide complex. In the currently preferred embodiment, PHMB is reacted with BMDGA to form the adduct, and the adduct is combined with a silver salt, preferably silver iodide, to form a PHMB:MBDGA:AgI complex. As will be readily apparent to those skilled in the art, these techniques can be used to make complexes of organic materials and biocides based on materials other than PHMB, MBGDA and AgI provided that the materials have the required functional characteristics, that is, the ability to form a complex which has antimicrobial properties and will not leach or release the biocide into a liquid or other substance in contact with the complex, but which will preferentially transfer the biocide to a microorganism in contact with the complex.

The method for applying the liquid compositions to form an antimicrobial coating generally comprises providing a solution, dispersion or suspension of the organic polycationic material, and, if a non-crosslinked material is desired, coating the solution, dispersion or suspension of the organic polycationic material onto the substrate, and drying the coating, thereby forming a matrix.

If a crosslinked coating is desired, the organic polycationic material first is combined with a crosslinking agent. Typically, both the organic polycationic material and the crosslinker will be in liquid form (e.g., in a solution, dispersion or suspension), and the two solutions are combined, forming a liquid mixture. The liquid may be an organic solvent, an aqueous liquid or a mixture of an organic solvent and an aqueous liquid. The organic polycationic material and the crosslinking agent then are reacted to form an adduct. The resulting adduct can be stored for later use, if desired, or can be immediately applied to a substrate.

Another embodiment of the method of making the coatings of the present invention comprises first combining the organic polycationic material and the metallic biocide, then applying the mixture to the substrate to form the matrix as described above. If a crosslinked coating is desired, the organic material and crosslinking agent are reacted to form an adduct as described above, then the adduct is combined with the biocide. The resulting adduct/biocide mixture can be stored for later use, or can be immediately applied to the substrate.

In the methods of the invention described above, the amounts and/or concentrations of the materials used will depend upon the nature and stoichiometry of the materials used, and the end product desired. In the currently preferred embodiments, the concentration of the solution, dispersion or suspension of the organic polycationic material, or the organic adduct resin formed by the reaction of the polymer and crosslinker, typically is in the range of from about 0.5 to about 20% by weight. Typically, a polymer:crosslinker ratio in the range of from about 1:1 to about 3:1 (weight percent) will form crosslinked networks which will non-leachably retain the biocide and preferentially transfer the biocide to the microorganism upon contact as described herein. Solutions of the biocidal material typically comprising from about 0.005 to about 0.5 % by weight can be used to impregnate the matrix with biocide.

In another embodiment, an antimicrobial powder may be formed by casting a freestanding film, as described above, then grinding the film to a powder. The powder also may be formed by precipitating from solution the complex between the organic polycationic material and the biocidal metallic material, drying the precipitate and grinding it to form the powder. The powder has similar contact-killing antimicrobial properties to the films and coatings described above. The antimicrobial powder can be incorporated into a carrier, such as a gel, cream or liquid, and applied to a surface to form an antimicrobial layer. For example, a formulation comprising the antimicrobial powder dispersed in a pharmaceutically acceptable carrier can be used as a topical antiseptic and be applied to a wound.

The antimicrobial compositions of the present invention are unique in the following respects:
i) The unique nature of the antimicrobial composition utilizes a cooperative effect of its components. This results in high biocidal activity, while maintaining almost no significant leachables into solutions it is in contact with.
ii) The mechanism of action is essentially a surface mediated one, whereby organisms succumb only upon contact with the material due to the non-leaching property associated with it.
iii) The ability of such surfaces to remain completely inert in solution in the absence of microorganism contamination.
iv) The ability of such surfaces to remain viable over multiple organism challenges with no decrease in their bioactivity.

The above and other objects, features and advantages of the present invention will be better understood from the following specification when read in conjunction with the accompanying drawings.

### Brief Description of the Drawings

Figure 1A is a schematic graphic illustration of the matrix/biocide complex of the present invention, before contact of the coating with microorganisms.
Figure 1B is a schematic graphic illustration of the contact-killing ability of the matrix/biocide complex of the present invention during contact of the coating with microorganisms.

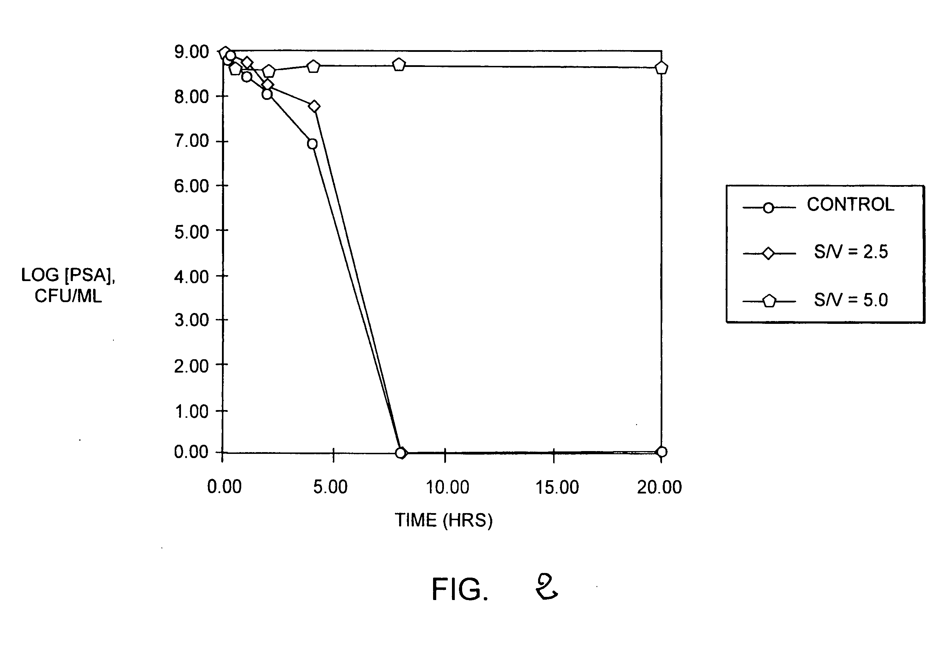

Figure 2 is a graph illustrating the bioactivity of a preferred coating of the present invention, a matrix formed from crosslinked PHMB complexed with silver salts, treated as a function of surface area to volume against *Pseudomonas aeruginosa* microorganisms in phosphate buffered saline at 30°C.

### Detailed Description

The term "microorganism" as used herein includes bacteria, fungi.

The term "biocidal" as used herein means the killing of microorganisms, or inhibiting the growth of microorganisms, which can be reversible under certain conditions.

As used herein, the terms "non-leachable" or "substantially non-leachable" means that none or very minute amounts (e.g., below a certain threshold) of the organic and/or biocidal material dissolves into a liquid environment. Preferably, this threshold is no higher than 1 part per million (ppm), and more preferably is lower than 100 parts per billion (ppb).

Organic polycationic materials useful in the present invention comprise materials which are capable of: 1.) reversibly binding or complexing with the biocide, and 2.) insinuating the biocide into the cell membrane of the microorganism. A preferred class of materials are those having the aforementioned properties, which are capable of being immobilized on a surface and which preferentially bind a biocidal metallic material in such a manner so as to permit release of the metallic biocide to the microorganism but not to the contacting environment. Most preferred is the class of organic materials which can dissolve into, adhere to, disrupt or penetrate the lipid bilayer membrane of a microorganism.

Preferred polycationic materials include benzalkoniumchloride derivatives, a-4-[1-tris(2-hydroxyethyl) ammonium-2-butenyl] poly[1-dimethylammonium-2-butenyl]-ω -tris(2-hydroxyethyl) ammonium chloride, and polybiguanides of the general formula: 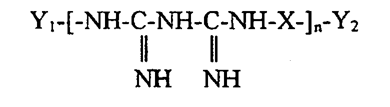 or their water soluble salts, where X is any aliphatic, cycloaliphatic, aromatic, substituted aliphatic, substituted aromatic, heteroaliphatic, heterocyclic, or heteroaromatic group, or a mixture of any of these, and Y₁ and Y₂ are any aliphatic, cycloaliphatic, aromatic, substituted aliphatic, substituted aromatic, heteroaliphatic, heterocyclic, or heteroaromatic group, or a mixture of any of these, and where n is an integer equal to or greater than 3 Preferred compounds include polyhexamethylene biguanide (available from Zeneca Biocides, Inc. of Wilmington, DE). The above-mentioned organic materials may be modified to include a thiol group in their structure so as to allow for the bonding of the compound to a metallic substrate, or may be derivatized with other functional groups to permit direct immobilization on a non-metallic substrate. For example, the above-mentioned organic materials may be suitably functionalized to incorporate groups such as hydroxy, amine, halogen, epoxy, alkyl or alkoxy silyl functionalities to enable direct immobilization to a surface.

In a preferred embodiment of the present invention, the organic material comprises a polycationic material which is crosslinked to form the matrix. Crosslinking agents which can be used in the present invention are those which react with the polycationic material to form an adduct which then can be reacted to form a crosslinked network or matrix. Suitable crosslinking agents include, for example, compounds containing organic multifunctional groups such as isocyanates, epoxides, carboxylic acids, acid chlorides, acid anhydrides, succimidyl ether aldehydes and ketones, and organic compounds such as alkyl methane sulfones, alkyl trifluoromethane sulfonates, alkyl paratoluene methane sulfones, alkyl halides and organic multifunctional epoxides. In a currently preferred embodiment, a polyhexamethylene biguanide polymer is reacted with an epoxide, such as N,N-methylene bisdiglycidylaniline, which then is cured to form a crosslinked network.

The biocidal material can be any antimicrobial metallic material which is capable of non-leachably binding to or complexing with the organic matrix, but which, when placed in contact with the microorganism, preferentially transfers to the microorganism. For this purpose, metallic materials which are toxic to microorganisms are preferred. The metallic material can be a metal, metal oxide, metal salt, metal complex, metal alloy or mixture thereof. Examples of such metals include, e.g., silver, zinc, cadmium, lead, mercury, antimony, gold, aluminum, copper, platinum and palladium, their oxides, salts, complexes and alloys, and mixtures of these. The appropriate metallic material is chosen based upon the use to which the device is to be put. The currently preferred metallic materials are silver compounds.

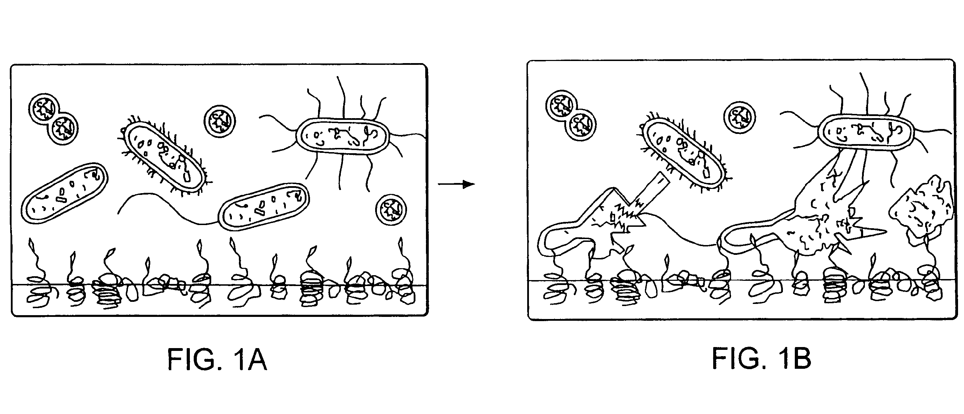

In a preferred embodiment, the organic polycationic material, whether crosslinked or non-crosslinked, forms an insoluble, non-leachable matrix having a unique configuration: some of the organic material protrudes into the surrounding environment, that is, "arms" or "tentacles" of the organic material project away from the matrix and into the surrounding environment. This phenomenon can be understood by referring to Figure 1, which are schematic graphic illustrations of a preferred coating of the present invention in which the organic polycationic material is a crosslinked biguanide polymer and the biocidal material is a silver halide salt, preferably silver iodide. Figures 1A and 1B show the polymer matrix having tentacles projecting into the ambient environment, and the silver salt deposited in reservoirs and on the tentacles. Without wishing to be bound by theory, it is believed that when a microorganism contacts the coating, the biguanide polymer tentacles dissolve into the lipid bilayer surrounding the microorganism, thereby introducing silver molecules into the interior of the microorganism or to proteins within the cell membrane. The silver salt has a greater affinity for certain proteins in the microorganism than for the polymer, and therefore complexes with the cellular proteins and is transferred into the microorganism, thereby killing it. Specifically, it is thought that the silver forms complexes with the sulfhydryl and amino groups of the cellular proteins.

In this embodiment, the silver salt is attached to or impregnated into the matrix and on the tentacles of the polymer such that the silver is substantially non-leachable. Again, not wishing to be bound by theory, it is believed that the silver salt forms complexes with functional groups in the polymer, and that the complexed silver resists leaching into ambient liquids or other materials (e.g., creams or gels) in contact with the coated surface. However, when the coating becomes exposed to cellular proteins, the silver preferentially complexes with the proteins.

In a currently preferred embodiment, the polymeric material is polyhexamethylene biguanide (PHMB), the crosslinking agent is N,N-methylenebisdiglycidylaniline (MBDGA), and the silver salt is a silver halide, most preferably, silver iodide. In this embodiment, the liquid composition is made by combining a solution of polyhexamethylene biguanide with a solution of the crosslinking agent, and reacting the mixture under conditions sufficient to form a non-crosslinked PHMB-MBDGA adduct. The ratio of PHMB to MBDGA preferably is in the range of from about 1:1 to 3:1 by weight. The PHMB-MBDGA mixture is heated to about 95°C for about 2 hours in a closed reactor to form the adduct. The concentration of the resulting adduct resin preferably is in the range of from about 0.5 to about 20% by weight. To form a contact-killing antimicrobial coating, the adduct resin solution is coated onto the desired substrate, and heated to a tempeature sufficient to induce crosslinking between the adducts, thereby forming a crosslinked network or matrix. Temperatures sufficient for crosslinking typically are in the range of from about 70°C to about 200°C. The resulting crosslinked network is then saturated with silver by immersing the coating for about two minutes in a silver iodide/potassium iodide solution. Silver solutions having a concentration of from about 0.005 to about 0.5% can be used for this step. The silver iodide forms reservoirs in the matrix, and becomes attached to the tentacles. Silver iodide has sufficient affinity for the PHMB polymer that it forms an insoluble complex that will not leach into ambient solutions or other materials in contact with the material, even at elevated temperatures. However, when a microorganism contacts the coating, the tentacles disrupt the microorganism's lipid bilayer membrane, thereby introducing the silver iodide into the microorganism. Silver iodide has greater affinity for certain proteins within the microorganism than for the PHMB-MBDGA matrix, and forms complexes with these proteins, that is, the silver is preferentially transferred from the coating to the microorganism. The silver accumulates to toxic levels in the microorganism and kills it. The silver iodide reservoirs within the matrix replenish the silver iodide on the tentacles lost to the microorganism by reestablishing the equilibrium for formation of the complex (AgI + PHMB 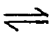 [PHMBAgI]).

The mechanism of action is one wherein the biocidal materials are activated only upon contact with the microorganism. Once the microorganism accumulates a toxic amount of silver, it succumbs and detaches from the surface. The coating or other treated surface, therefore, remains active only as long as viable organisms contact it, and reverts to being inert in their absence. This unique property whereby the biological activity is triggered by bacterial cell contact enables the coating to function "intelligently." For such a contact mechanism to be effective, the rate of kill is expected to vary as a function of the ratio of total surface area of coated substrate to the volume of the bacterial suspension in contact with it (S/V ratio) at constant temperature. As shown in the Examples, time to kill experiments were performed on coated polyethylene tubes of varying inner diameter that were inoculated with predetermined volumes of a suspension containing 10⁶ CFU/mL of *Pseudomonas aeruginosa* in phosphate buffered saline (PBS). The decrease in organism concentration was measured as a function of time at constant temperature over 20 hours. Experimental results are summarized in Figure 3. There is no substantial difference in kill rate for S/V ratios ranging from 2.5 to 5 cm⁻¹ ; similar results were obtained for a ratio of 1.5. For the largest diameter tubes tested (S/V = 0.5), however, viable organisms were detected at low levels, which can be attributed to a decrease in probability of organisms contacting the surface with increasing volumes. No toxic components were found in organism-free solutions in contact with coated tubes under identical conditions when tested both chemically and biologically, which supports the proposed contact mechanism for cell death. Such a distinction would not be evident if sterilization were to occur via either controlled dissolution or diffusive elution of the coating components into solution; in either case, high levels of active components would be present in solution.

The antimicrobial compositions of the present invention in powder form can be dispersed or dissolved in a carrier and used as a topical antiseptic, wound dressing or topical disinfectant. Such carriers may include creams, gels, lotions, soaps or other topically applicable materials.

### EXAMPLES

### Example 1

### Preparation of PHMB-BMDGA Solutions

Polyhexamethylene biguanide (PHMB) (available as a 20% aqueous solution from Zeneca Biocides, Wilmington, DE) was distilled to remove the water, and the PHMB was redissolved in absolute ethanol to give a 20% by weight solution. This solution was used to prepare the resins outlined below.
(a) 312 mL of the 20% PHMB solution in ethanol was further diluted with 600 ml of ethanol. This solution was added to a solution of N,N-methylene bisdiglycidylaniline) (MBDGA) (Aldrich Chemical Company, Milwaukee, WI) containing 37.60 grams of MBDGA dissolved in 119.9 ml of acetonitrile and 280.1 ml of ethanol. The resulting mixture was heated at 95°C in a closed reactor for two hours, forming a PHMB-MBDGA adduct. The adduct solution was cooled and filtered (Scientific Grade 417 filter). The resulting adduct solution contained 10% by weight of PHMB:BMDGA adduct having a PHMB:MBDGA ratio of 1.5:1.
(b) 330 mL of the 20% PHMB. This solution was combined with 100 ml of a sodium hydroxide (NaOH) solution containing 66 grams of NaOH, 66 ml of water and 34 ml of ethanol. This mixture was added to a solution containing 40 grams of MBGDA, 120 ml of acetonitrile and 280 ml of ethanol. The resulting solution was heated at 95°C for 2 hours forming the PHMB-MBDGA adduct. The solution was cooled and filtered as described above. The resulting adduct solution contained 10% by weight of PHMB:MBDGA adduct having a PHMB:MBDGA ratio of 1.5:1.

The resins were characterized according to the following procedures:
1. Film formation was tested by a dip test with PE/PP (polyethylene/polypropylene) in which PE/PP samples were dipped in the resin solutions made in (a) and (b) above and dried by hot air blowing, and film formation was observed;
2 The ratio of polymer to crosslinker (PHMB-MBDGA) in the resin solution was tested by UV/visible spectroscopy;
3 Gelation time of the resin mixture was tested

The resins were diluted with ethanol to a concentration of 1%. Film formation of the diluted resins were tested by the dip test with PE/PP as described above. Both resins formed a coherent film. The resins were stored in closed containers at ambient temperature.

### Example 2 (not forming part of the invention)

### Coating of Plastic Articles

Various plastic articles were coated using the coating solutions described in Example 1.
1. contact lens cases: polyethylene and polypropylene contact lens cases were coated according to the following procedure:
   The contact lens cases were cleaned by immersing them in absolute ethanol for 5 minutes and dried. The cleaned cases were immersed in the antimicrobial coating solution (Example 1a or 1b) for 1 to 2 minutes. The sample cases were dried by hot air blowing. Crosslinking was induced by heating the cases at 120°C for the polyethylene cases and at 200°C for the polypropylene cases for 2 hours. The cases were allowed to cool, rinsed with 60°C water to remove any unbound polymer, then dried at 60°C for 1-3 hours.
      The coated cases were immersed in a 0.05% solution of silver iodide/potassium iodide in alcohol for 2 minutes. The cases were rinsed with aqueous alcohol to remove any unbound silver The cases then were rinsed with water and dried.
2. Toothbrush bristles: toothbrushes with nylon bristles were coated according to the procedure described for contact lens cases, except that the cross-linking reaction was carried out at 120-140°C.
3. Polyurethane and Polyvinylchloride Catheters: polyurethane and polyvinyl chloride catheters were coated according to the procedure described for contact lens cases, except that the crosslinking reaction was carried out at 80-120°C for polyurethane and at 120°C for polyvinylchloride.
4. Dental Water Line Unit Tubing And Filters: polyurethane tubing and polyethersulfone membrane and housing were coated according to the procedure described for contact lens cases, except that the crosslinking reaction was carried out at 80-120°C for polyurethane and 120-140°C for polyethersulfone.
5. Coating Process for Silicone Parts The parts were pre-cleaned in 100% ethyl alcohol (reagent grade) to remove dirt, grease and other contaminants. They are then subjected to an alkaline etch by immersing them in a 0.1M NaOH in 90% ethanol solution (10% water) at room temperature and ultrasonicated for 2 minutes. They were then coated in an identical manner as the contact lens cases.
6. Coating Process for Teflon Parts: The parts were subjected to surface pretreatment by oxygen plasma for 5 minutes in a plasma reactor. They were then coated in an identical manner as the contact lens cases.
7. Coating Process for Nylon Sheets: Nylon sheets were pre-cleaned with 100% ethyl alcohol (reagent grade) to remove dirt, grease and other contaminants. The one part formulation of coating resin has been diluted with 100% ethyl alcohol to the desired concentration of 1 wt.%. The cleaned nylon sheet was immersed in the coating resin for a period of 1-2 mins. Then, the sheet was carefully removed from the coating resin bath and the excess adhering resin was allowed to drain off. The coating on the nylon sheets was dried by placing them in an oven at 70°C for 3-4 mins. Then, dried resin coating was then crosslinked by thermal curing at 120°C for a period of 2 hours. The cured samples were removed from the oven and allowed to cool to room temperature.
   This procedure was used to coat nylon toothbrush bristles, non-woven nylon and cellulose fibers.

### Example 3 (not forming part of the invention)

### Membrane Coating Procedure

Polyethersulfone and nylon membranes were cleaned as described in Example 2 above. The membranes were coated with the antimicrobial resin solution described in Example 1 (1a or 1b) and dried. The coatings then were crosslinked by heating at 120°C for approximately 2 hours. The resulting crosslinked coatings were rinsed with water to remove any unbound polymer, were rinsed with acidified water or buffer [pH 2-2.5], followed by another water rinse, then dried. Silver was deposited into the crosslinked polymer matrix by immersing the coated membrane in a 0.05% solution of a silver iodide/potassium iodide complex in aqueous alcohol.
Unbound silver iodide was removed by an ethanol wash The membrane was rinsed with water, then dried at 70°C for 30 minutes.

### Example 4 (not forming part of the invention)

### Contract Killing Ability

The coated articles described in Example 2 and the membranes described in Example 3 were exposed to a variety of bacteria from the following genera:
*Pseudomonas, Staphylococcus, Serratia, Klebsiella, Bacillus, Enterococcus* and *Aspergillus,* and a fungus from the genus *Candida*. The species of microorganisms used are listed in Tables 1 and 2.
The articles and membranes were incubated with the microorganisms at 3 5-30°C for at least 20 hours, and for as long as 504 hours (21 days). The results are shown in Tables 1 and 2:

**TABLE 1**

| Biocidal activity of treated surface | | |
|---|---|---|
| **Organism** | **Challenge** | **Time to Kill** Complete kill at 30°C |
| *Pseudomonas dimunata* | 10⁶CFU/mL | 20 hours |
| *Pseudomonas cepacia* | 10⁶CFU/mL | 20 hours |
| *Staphylococcus aureus* | 10⁶CFU/mL | 20 hours |
| *Serratia marcescens* | 10⁶CFU/mL | 20 hours |
| *Escherichia coli* | 10⁶CFU/mL | 20 hours |
| *Klebsiella pneumoniae* | 10⁶CFU/mL | 20 hours |
| *Bacillus subtilis* | 10⁶CFU/mL | 20 hours |
| *Bacillus cerius* | 10⁶CFU/mL | 20 hours |
| *Staphylococcus epidermidis* | 10⁵CFU/mL | 72 hours |
| *Enterococcus faecalis* | 10⁶CFU/mL | 20 hours |
| *Candida albicans* | 10⁶CFU/mL | 168 hours |
| *Aspergillus niger* | 10⁵CFU/mL | no growth* |

| | | |
|---|---|---|
| * 21 days at 25°C | | |

**TABLE 2**

| Bacterial Growthrough Challenge of Treated Membranes with 10⁶ CFU/mL *Pseudomonas aeruginosa* In PBS at 30°C | | |
|---|---|---|
| **Membrane Type** | **Days in Test** | **Days to Failure** |
| Nylon Membrane, 0.2 µm, untreated control | 32 | 30 |
| Nylon Membrane, 0.2 µm, AMS coated | 54 | None |
| Polyether sulfone 0.2 µm, untreated control | 5 | 3 |
| Polyether sulfone 0.2 µm, AMS coated | 70 | None |

| | | |
|---|---|---|
| AMS = antimicrobial surface | | |

### Example 5

### Kinetics of antimicrobial action

The coating acts upon contact with the micro-organism, first intercalating into the cell membrane and second transferring the bio-toxic agent directly to the contacting organism. The following time to kill experiment was performed on polyethylene tubes with various diameters coated with the PHMB-MBDGA-silver coating described in Example 1. Coatings were applied as described in Example 2 for the contact lens cases. The tubes were inoculated with predetermined volumes of initial concentrations of up to 10⁹ cfu/mL of *Pseudomonas aeruginosa* (ATCC#9027) in PBS and incubated at 30°C for 20 hours. At various time points tubes were sampled and the micro-organism was plated and counted. The treated tubes demonstrated significant antibacterial activity even when volume to surface ratios (S/V) exceeded 4:1. The results are shown in Figure 3.

Additional evidence for the contact killing mechanism was provided by the following experiment. Polypropylene tubes were coated as described in Example 2 for contact lens cases. The coated tubes and untreated controls were challenged with 10⁶ cfu/ml of *Pseudomonas aeruginosa* in PBS at 30°C for 20 hours. An organism count by standard plating techniques showed no viable organisms, i.e., a complete elimination (6 log decrease) compared to the untreated tubes.

The solution containing the dead bacteria from the coated tubes was digested in 0.1M nitric acid and analyzed for the presence of silver. Silver concentration was found to be about 600 ppb. A coated tube containing blank PBS (no bacteria) incubated for the same time showed no detectable silver in the solution (less than 10 ppb).

### Example 6 (not forming part of the invention)

### Non-leachability of the Coatings

To simulate an aging of approximately 1 year at ambient temperature, membranes with very large surface area were coated as described in Example 3. The coated membranes were immersed in water, isotonic saline and phosphate buffered saline solutions at 70°C for 5 days The test solutions were analyzed for elutables by spectroscopic methods with sensitivities less than 10 parts per billion (ppb) of active ingredients, i.e., PHMB, BMDGA, silver and iodide. The following levels were found:
Silver: less than 10 ppb (below detection limit)
PHMB: less than 100 ppb (below detection limit)
MBGDA: less than 300 ppb (below quantitation limit)
Iodide: less than 50 ppb (below quantitation limit)

These analytical results were further confirmed by testing the contact solutions to demonstrate that they show no antimicrobial activity by challenging them with silver sensitive *Escherichia coli* (ATCC # 8739) at a concentration of 10⁶ cfu/mL. No decrease in numbers of the microorganism was detected after 20 hours.

### Example 7 (not forming part of the invention)

### Toxicity

For assessing mammalian cell toxicity, polypropylene tubes coated as described in Example 2 for contact lens cases, were aged in phosphate buffered saline at 50°C for 48 hours. Test solutions were evaluated for toxicity with mouse fibroblast cells and showed no toxicity to the cells.

### Example 8

### Surface Bio-Activity

The coating kills micro-organisms on contact - but is non-toxic to mammalian cells. In laboratory testing, treated surfaces (polypropylene, polyethylene, nylon and polyethersulfone) effectively eliminated all human pathogens tested - including bacteria, yeasts and fungi.
- *Bacillus cereus* (ATCC#11778)-10⁶ cfu/mL in 20 hours
- *Escherichia coli* (ATCC#8739)-106 cfu/mL in 20 hours
- *Pseudomonas aeruginosa* (ATCC#9027)- 10⁶ cfu/mL, in 20 hours
- *Pseudomonas cepacia* (ATCC#25416)-10⁵ cfu/mL in 20 hours
- *Pseudomonas diminuta* (ATCC#19146)- 10⁶ cfu/mL in 20 hours
- *Klebsiella pneumoniae* (ATCC#13883)-10⁶ cfu/mL in 20 hours
- *Staphyllococus aureus* (ATCC#6538)-10⁶ cfu/mL in 20 hours
- *Serratia marcescens* (ATCC#8100)-106 cfu/mL in 20 hours
- *Enterococcus faecalis* (ATCC#19433)-10⁶ cfu/mL in 20 hours
- *Staphyllococus epidermidis* (ATCC#12228)-10⁶ cfu/mL in 72 hours
- *Candida albicans* (ATCC#10231)-10⁵ cuf/mL in 168 hours

Surfaces coated as described in Example 2 were challenged with these microorganisms in the initial concentrations indicated. The microorganisms were suspended in phosphate buffered saline and were allowed to remain in contact with the treated surfaces for extended periods at 30°C. The solutions were then analyzed using standard plating methods. While organism growth was documented on untreated surfaces, the microorganisms were completely eliminated on the treated samples in the specified time period. These results were confirmed in thousands of tests conducted over three years.

In addition, the treated surfaces were tested against *Aspergillus niger* No fungal growth was detected over the 28 day test period.

### Example 9

### Antibiotic Resistant Bacteria

Untreated and treated (as described in Example 2) surfaces were challenged with 10⁶ cfu/mL of methicillin and neomycin resistant strain of *Staphylococcus aureus* (ATCC#33592). The micro-organism was suspended in phosphate buffered saline and were allowed to remain in contact with the surfaces. Within 20 hours, treated surfaces had no viable organisms, whereas the number of viable organisms on untreated surfaces remained unchanged.

### Example 10

### Preparation of the Complex of Silver Iodide with Poly(hexamethylenebiguanide)

10 g of Cosmosil CQ (Zeneca, Biocides, Wilmington, DE), 10 ml of ethanol (EtOH) and 1.2 g of potassium iodide (KI) were mixed together. The resulting solution was added dropwise to 400 ml of an aqueous ethanol (1:1 v/v) solution containing 0.5% (w/v) of silver iodide and 6% (w/v) of potassium iodide. Precipitated white rubbery product was separated from the solution, rinsed with 50 ml of 50% (v/v) aqueous ethanol, and dried in a vacuum oven for 18 hours at 50°C. Silver containing product obtained after drying was a transparent light yellow color semisolid resin with a silver content of 10 7%.

### Example 11

### Preparation of Polyhexamethylenebiguanide base (PHMB) from Polyhexamethylenehydrochloride Soluition

200 ml of Cosmocil CQ solution (Zeneca Biocides, Wilmington, DE) was neutralized by addition of 200 ml of aqueous NaOH (40 wt%) slowly with stirring, forming a precipitate. After filtering the supernatant liquid, the precipitate was suspended in 400 ml of alcohol. The PHMB suspension was diluted to 500 ml with additional alcohol and filtered. 10 ml of aliquot (filtered) gave 0.7 g of dried (100°C, 15 min) product. Calculated yield of PHMB solid in total solution was 35 g.

### Example 12

### Preparation of PHMB-Epoxide Resin (PHMB-MBDGA)

17.5 g of 4,4'-methylenebisdiglycidylaniline (MBDGA) (Aldrich Chemical Company, Milwaukee) was dissolved in 70 ml of acetonitrile. The resulting MBDGA solution was added in dropwise to the PHMB solution described in Example 14 that had been preheated in a water bath to 80-90°C with stirring. The reaction mixture turned turbid during the addition. The reaction was allowed to proceed for about 30 minutes at which time the solution became clear. The reaction vessel was removed from the bath and cooled. The pH of the cooled solution was adjusted to 3.65 by slow addition of 2N alcoholic HCl in alcohol.

### Example 13

### Preparation of the Complex of Silver Iodide with PHMB-MBDGA Resin

30 ml of 10% (w/v) ethanol solution of PHMB-MBDGA (2.1 w/w) resin (prepared as described in Example 15 above) was mixed with 30 ml of anhydrous ethanol and 3.6 g of potassium iodide. The resulting solution was added dropwise to 400 ml of an aqueous ethanol (1:1 v/v) solution containing 0.5% (w/v) of silver iodide and 6% (w/v) of potassium iodide. Precipitated white rubbery product was separated from the solution, rinsed with 50 ml of 50% (v/v) aqueous ethanol, and dried in vacuum oven for 18 hours at ambient temperature. The silver containing productobtained was a transparent light yellow color solid resin with a softening point 40-45°C and a silver content of 3 8%.

### Example 14

### Preparation of the Complex of Silver Iodide with Crosslinked PHMB-MBDGA Resin

500 ml of 10% (w/v) ethanol solution of PHMB-MBDGA (2.1 w/w) resin was prepared as in Examples 15-17 above. The volume of obtained solution was reduced to approximately 100 ml by solvent evaporation under vacuum in a rotovapor at a water bath temperature of 70°C. To accomplish solvent removal, the resulting viscous resin solution was transferred into glass beaker and placed in vacuum oven at ambient temperature. After 30 minutes of drying, the oven temperature was increased to 75°C and the sample was left in vacuum for another 16 hours The solid product obtained was cured at 130°C for 2 hours in a regular oven. The cured resin was ground to make resin powder with a particle size about 50 microns. A quantitative yield of crosslinked PHMB-MBDGA resin (>90%) was obtained at the end of the powder preparation process.

10 g of silver iodide and 55 g of potassium iodide were dissolved in a mixture of 50 ml of water and 150 ml of ethanol Crosslinked resin powder (15 g) prepared as described above was immersed in the silver solution and left under agitation for 30 minutes. Then solid matter was separated from the supernatant and resuspended in 100 ml of anhydrous ethanol. After 10 minutes of washing, the resin powder was recovered from the mixture, rinsed with a fresh portion of alcohol (50 ml) and dried under vacuum at room temperature for 16 hours. 22 g of silver loaded crosslinked PHMB-MBDGA resin powder with a 5.9% silver content was obtained after complete solvent evacuation. Before use, the resin powder was ground and sieved through a standard testing sieve to get the particle size below 53 microns.

### Example 15

The broad spectrum antimicrobial activity of the resin powder made as described in Examples 13-17 was evaluated as follows. The powder was suspended in phosphate buffered saline (PBS) at resin concentrations ranging from 0.05 mg/mL to 100 mg/mL.

The suspensions were inoculated with the following challenge microorganisms:

| | |
|---|---|
| *Pseudomonas aeruginosa* | *ATCC 9027* |
| *Escherichia coli* | *ATCC 8739* |
| *Staphylococcus aureus* | *ATCC 6538* |
| *Serratia marcescens* | *ATCC 8100* |
| *Staphylococcus epidermidis* | *ATCC 12228* |
| *Candida albicans* | *ATCC 10231* |

All microorganisms were inoculated as a suspension in PBS to the resin suspensions in PBS. PBS solutions without resin powder were used as controls. A bacterial challenge level of approximately 10⁶ cfu/mL was maintained for all resin concentrations. After inoculation, the solutions were incubated at 30°C for 20 hours, following which the number of viable organisms was determined by the standard spread plate method. A pass criteria was set for the antimicrobial efficacy of the resin suspensions which required the complete elimination of each type of microorganism over the 20 hour time period.

### Test Results

**Table 1. Antimicrobial Efficacy of Resin Powder Against Bacteria**

| Sample (mg/mL) | Organism | Final Conc. * (CFU/mL) | Sample (mg/mL) | Organism | Final Conc * (CFU/mL) |
|---|---|---|---|---|---|
| Control | *P. aeruginosa* | 4.5x10⁶ | Control | *S. marcescens* | 3.1x10⁵ |
| 100 | *P. aeruginosa* | 0 | 1 | *S. marcescens* | 0 |
| 10 | *P. aeruginosa* | 0 | 10 | *S. marcescens* | 0 |
| 1 | *P. aeruginosa* | 0 | 100 | *S. marcescens* | 0 |
| | | | | | |
| Control | *E. coli* | 1.75x10⁶ | Control | *S. epidermidis* | 3.85x10⁵ |
| 100 | *E. coli* | 0 | 1 | *S. epidermidis* | 0 |
| 10 | *E. coli* | 0 | 10 | *S. epidermidis* | 0 |
| 1 | *E. coli* | 0 | 100 | *S. epidermidis* | 0 |
| | | | | | |
| Control | *S. aureus* | 2.4x10⁶ | | | |
| 100 | *S. aureus* | 0 | | | |
| 10 | *S. aureus* | 0 | | | |
| 1 | *S. aureus* | 0 | | | |

| | | | | | |
|---|---|---|---|---|---|
| *Average value | | | | | |

**Table 2. Antimicrobial Efficacy of Resin Powder Against Bacteria and Yeast**

| Sample (mg/mL) | Organism | Final Conc. * (CFU/mL) | Sample (mg/mL) | Organism | Final Conc. * (CFU/mL) |
|---|---|---|---|---|---|
| Control | P. aeruginosa | 9.3x10⁴ | Control | S. marcescens | 1.75x10⁶ |
| 1.00 | P. aeruginosa | 0 | 1.00 | S. marcescens | 0 |
| 0.75 | P. aeruginosa | 0 | 0.75 | S. marcescens | TCF/O* |
| 0.50 | P. aeruginosa | 0 | 0.50 | S. marcescens | 0 |
| 0.25 | P. aeruginosa | 0 | 0.25 | S. marcescens | TFC/0* |
| 0.10 | P. aeruginosa | 0 | 0.10 | S. marcescens | 0 |
| 0.05 | P. aeruginosa | 0 | 0.05 | S. marcescens | 0 |
| | | | | | |
| Control | E. coli | 8.2x10⁴ | Control | C. albicans | 2.6x10⁵ |
| 1.00 | E. coli | 0 | 1.00 | C. albicans | 0 |
| 0.75 | E. coli | 0 | 0.75 | C. albicans | 0 |
| 0.50 | E. coli | 0 | 0.50 | C. albicans | 0 |
| 0.25 | E. coli | 0 | 0.25 | C. albicans | TCF/O** |
| 0.10 | E. coli | 0 | 0.10 | C. albicans | 0 |
| 0.05 | E. coli | *** | 0.05 | C. albicans | 0 |
| | | | | | |
| Control | S. aureus | 13x10⁵ | | | |
| 1.00 | S. aureus | 0 | | | |
| 0.75 | S. aureus | 0 | | | |
| 0.50 | S. aureus | 0 | | | |
| 0.25 | S. aureus | 0 | | | |
| 0.10 | S. aureus | 0 | | | |
| 0.05 | S. aureus | 0 | | | |

| | | | | | |
|---|---|---|---|---|---|
| * Average value **TCF/O - Number of colonies well below statistical relevance *** Counts not available | | | | | |

The resin powder completely eliminated all microorganisms used in the study over the range of varying concentrations within a 20 hour time period over the entire range of resin concentrations.

### Example 16

### Preparation of Chain Extended PHMB by Reaction with Hydrophobic Epoxide

32.5 of Poly(Bisphenol A-coephichlorohydrin)glycidyl end capped (mol. wt. = 1075, Aldrich) was dissolved in 77 mL of N,N-dimethylformamide (DMF) with stirring. 250 mL of a 13% (by wt.) solution of PHMB (base) in 250 mL of absolute ethanol was added quickly. The turbid solution was heated in a water bath at 90°C for one hour with stirring. A clear viscous solution was obtained which was allowed to cool to room temperature that is immisicible with water.

### Example 17

### Preparation of Chain Extended PHMB by Reaction with Hydrophobic Epoxide

17.3 g of N,N-dyglycidylether-4-glycidyloxyaniline (Aldrich) was dissolved in 25 mL of N,N-dimethylformamide (DMF) with stirring. 130 mL of a 20% solution of PHMB HCl (Cosmocil CQ, Zeneca Biocides, Delaware) was added quickly followed by 70 mL of distilled water. The turbid solution was refluxed in a water bath for 2 hours with stirring. A clear viscous solution was obtained which was allowed to cool to room temperature The resulting chain extended compound is immisicible with water or pure ethanol, but is miscible in a solution of 50% aqueous ethanol.

## Claims

1. A liquid antimicrobial composition comprising a carrier having dispersed therein a solid antimicrobial material comprising an organic polycationic polymer matrix having non-leachably bound or complexed thereto an antimicrobial metallic material for use as an antimicrobial for application to the skin.

2. The antimicrobial composition of claim 1, wherein the antimicrobial material is a powder, and the antimicrobial composition is a liquid suspension.

3. The antimicrobial composition of claim 1, wherein the antimicrobial material is a microbead, and the antimicrobial composition is a liquid suspension.

4. The antimicrobial composition of claim 1, wherein the antimicrobial material is film forming, and the antimicrobial composition is a liquid suspension.

5. The antimicrobial composition of any of claims 1-4 wherein the antimicrobial metallic material is silver.

6. The antimicrobial composition of claim 5, wherein the polycationic polymer matrix is a biguanide polymer.

7. The antimicrobial composition of claim 6, wherein the polycationic polymer matrix comprises an adduct of a polycationic polymers and a crosslinking agent.

8. The antimicrobial composition of claim 1, comprising a soap having dispersed therein an organic polycationic polymer matrix and an antimicrobial metallic material.

9. The antimicrobial composition of claim 1, comprising a cream, a gel, or a lotion having dispersed therein an organic polycationic polymer matrix and an antimicrobial metallic material.

10. The composition of claim 1, wherein the carrier is a cream, a gel, or a lotion.

11. The composition of any of claims 1 to 10, wherein the composition is a topical disinfectant.

12. The composition of claim 1 or claim 10, wherein the composition is for application to a wound.

## Patentansprüche

1. Flüssige antimikrobielle Zusammensetzung umfassend einen Träger, in dem ein festes antimikrobielles Material dispergiert ist, das eine organische polykationische Polymermatrix umfasst, an die ein antimikrobielles metallisches Material nichtauslaugbar gebunden oder komplexiert ist, zur Verwendung als Antimikrobiotikum zur Anwendung auf die Haut.

2. Antimikrobielle Zusammensetzung nach Anspruch 1, wobei das antimikrobielle Material ein Pulver ist und die antimikrobielle Zusammensetzung eine flüssige Suspension ist.

3. Antimikrobielle Zusammensetzung nach Anspruch 1, wobei das antimikrobielle Material eine Mikroperle ist und die antimikrobielle Zusammensetzung eine flüssige Suspension ist.

4. Antimikrobielle Zusammensetzung nach Anspruch 1, wobei das antimikrobielle Material filmbildend ist und die antimikrobielle Zusammensetzung eine flüssige Suspension ist.

5. Antimikrobielle Zusammensetzung nach einem der Ansprüche 1-4, wobei das antimikrobielle metallische Material Silber ist.

6. Antimikrobielle Zusammensetzung nach Anspruch 5, wobei die polykationische Polymermatrix ein Biguanidpolymer ist.

7. Antimikrobielle Zusammensetzung nach Anspruch 6, wobei die polykationische Polymermatrix ein Addukt von einem polykationischen Polymer und einem Vernetzungsmittel umfasst.

8. Antimikrobielle Zusammensetzung nach Anspruch 1, umfassend eine Seife, in der eine organische polykationische Polymermatrix und ein antimikrobielles metallisches Material dispergiert ist.

9. Antimikrobielle Zusammensetzung nach Anspruch 1, umfassend eine Creme, ein Gel oder eine Lotion, in der bzw. in dem eine organische polykationische Polymermatrix und ein antimikrobielles metallisches Material dispergiert ist.

10. Zusammensetzung nach Anspruch 1, wobei der Träger eine Creme, ein Gel oder eine Lotion ist.

11. Zusammensetzung nach einem der Ansprüche 1 bis 10, wobei die Zusammensetzung ein topisches Desinfektionsmittel ist.

12. Zusammensetzung nach Anspruch 1 oder Anspruch 10, wobei die Zusammensetzung zur Anwendung auf eine Wunde bestimmt ist.

## Revendications

1. Composition liquide antimicrobienne comprenant un support ayant en dispersion interne un matériau solide antimicrobien comprenant une matrice de polymère organique polycationique étant liée ou complexée de manière non lixiviable à un matériau métallique antimicrobien destinée à une utilisation en tant qu'antimicrobien pour une application à la peau.

2. Composition antimicrobienne selon la revendication 1, dans laquelle le matériau antimicrobien est une poudre, et la composition antimicrobienne est une suspension liquide.

3. Composition antimicrobienne selon la revendication 1, dans laquelle le matériau antimicrobien est une microbille et la composition antimicrobienne est une suspension liquide.

4. Composition antimicrobienne selon la revendication 1, dans laquelle le matériau antimicrobien est un filmogène, et la composition antimicrobienne est une suspension liquide.

5. Composition antimicrobienne selon l'une quelconque des revendications 1 à 4, dans laquelle le matériau métallique antimicrobien est de l'argent.

6. Composition antimicrobienne selon la revendication 5, dans laquelle la matrice de polymère polycationique est un polymère biguanidique.

7. Composition antimicrobienne selon la revendication 6, dans laquelle la matrice de polymère polycationique comprend un produit d'addition d'un polymère polycationique et d'un agent de réticulation.

8. Composition antimicrobienne selon la revendication 1, comprenant un savon ayant en dispersion interne une matrice de polymère polycationique organique et un matériau métallique antimicrobien.

9. Composition antimicrobienne selon la revendication 1, comprenant une crème, un gel, ou une lotion ayant en dispersion interne une matrice de polymère polycationique organique et un matériau métallique antimicrobien.

10. Composition selon la revendication 1, dans laquelle le support est une crème, un gel, ou une lotion.

11. Composition selon l'une quelconque des revendications 1 à 10, laquelle composition est un désinfectant topique.

12. Composition selon la revendication 1 ou la revendication 10, laquelle composition est destinée à une application à une plaie.
